# EUROPÄISCHE PATENTSCHRIFT

(11) **EP 0 239 675 B1**
(45) Veröffentlichungstag und Bekanntmachung des Hinweises auf die Patenterteilung: **14.04.1993**
(21) Anmeldenummer: 86117270.8
(22) Anmeldetag: 11.12.1986
(51) Int. Cl.: H04M 1/72

(54) **Verfahren zum Vermeiden des unberechtigten Mithörens bei schnurlosen Telefonen**
Method to prevent eaves-dropping at cordless telephones
Procédé pour éviter l'écoute illicite de téléphones sans fil

(30) Priorität: 03.04.1986 DE 3611100
(43) Veröffentlichungstag der Anmeldung: 07.10.1987
(73) Patentinhaber: ROBERT BOSCH GMBH, 70442 Stuttgart (DE)
(72) Erfinder: Löscher, Günther, Dipl.-Ing., D-1000 Berlin 49 (DE)

(56) Entgegenhaltungen:
- EP-A- 0 074 940
- EP-A- 0 227 148
- FR-A- 2 565 757
- PATENT ABSTRACTS OF JAPAN, Band 7, Nr. 243 (E-207)[1388], 28. Oktober 1983 & JP-A-58 133 060

## Beschreibung

### Stand der Technik

Die Erfindung geht von einem Verfahren nach der Gattung des Hauptanspruchs aus.

Es ist ein drahtloser Telefonapparat bekannt (EP-A1-0074940), bei dem ein Abhören eines Telefonats durch einen nichtberechtigten Teilnehmer dadurch verhindert wird, daß der rufende Sender und der gerufene Sender eines Stationspaars aus Basisstation und Mobilstation je einen unterschiedlichen und unveränderlichen Code aufweisen. Nur wenn der rufende Stationsteil den Code des zu rufenden Stationsteils aussendet, erkennt dieser den Code als seinen eigenen Code und sendet diesen oder einen anderen Code als Quittung an den rufenden Stationsteil. Hat der Empfänger des rufenden Stationsteils den Code als richtig erkannt, wird der Verbindungsaufbau hergestellt. Damit wird also lediglich ein doppeltes Einschalten von Feststationen durch eine nichtberechtigte, einen anderen Code aufweisende Mobilstation verhindert.

Die Gefahr eines unberechtigten Mithörens von Gesprächen besteht aber weiterhin, wenn Stationsteile einer benachbarten schnurlosen Telefonanlage eine Funkreichweite haben, die teilweise in das Funkgebiet der ersten schnurlosen Telefonanlage hineinreicht. Dann kann es ohne weiteres dazu kommen, daß zwei Teilnehmer verschiedener schnurloser Telefonanlagen zur gleichen Zeit auf demselben Duplex-Funkkanal ein Gespräch führen.

### Vorteile der Erfindung

Das erfindungsgemäße Verfahren mit den kennzeichnenden Merkmalen des Hauptanspruchs hat den Vorteil, daß ein gleichzeitiges Belegen eines Funkkanals durch zwei schnurlose Telefone verschiedener schnurloser Telefonanlagen verhindert wird, so daß in jedem Fall das Fernmeldegeheimnis gewahrt bleibt.

### Zeichnung

Ein Ausführungsbeispiel der Erfindung ist an Hand zweier Figuren dargestellt und in der nachfolgenden Beschreibung näher erläutert. Die Zeichnung zeigt in
- Fig. 1: ein vereinfachtes Blockschaltbild zweier Funkpaare aus verschiedenen schnurlosen Telefonanlagen und
- Fig. 2: ein ausführlicheres Schaltbild eines Funkpaares mit den erfindungswesentlichen Baueinheiten.

### Beschreibung der Erfindung

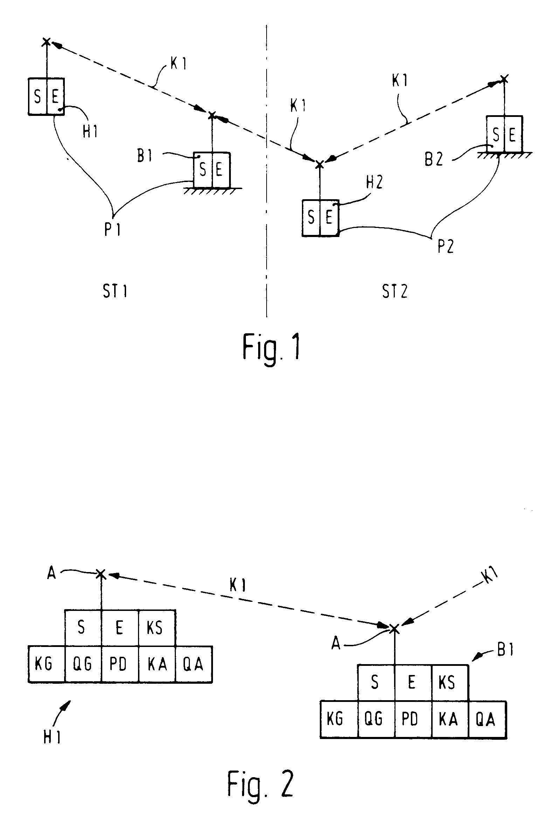

In Fig. 1 bezeichnen H1 eine in der Hand zu haltende erste Funksende- und -empfangsstation - im folgenden erster Handapparat genannt - und B1 eine erste Basis-Funksende- und -empfangsstation - im folgenden erste Basisstation genannt -. Handapparat H1 und Basisstation B1 gehören zu einer ersten schnurlosen Telefonanlage ST1 und bilden ein Funkpaar P1.

H2 und B2 bedeuten in analoger Weise einen zweiten Handapparat und eine zweite Basisstation, die zusammen ein zweites Funkpaar P2 bilden, das einer zweiten schnurlosen Telefonanlage ST2 angehört. Die Funkreichweiten der beiden Funkpaare P1, P2 mögen so groß sein, daß sie sich zumindest teilweise überlappen. Findet zum Beispiel ein Gespräch des Funkpaares P2 der zweiten schnurlosen Telefonanlage ST2 auf dem Funkkanal K1 statt und befindet sich die Basisstation B1 des Funkpaares P1 im Funkfeld des Handapparates H2, so reagiert ein Hochfrequenz-Pegeldetektor der ersten Basisstation B1 beim ständigen Absuchen der Funkkanäle auf den Träger des Funkkanals K1 der zweiten schnurlosen Telefonanlage ST2. Die erste Basisstation B1 stoppt daraufhin die weitere Kanalsuche. Will nun zum Beispiel der erste Handapparat H1 des Funkpaares P1 mit seiner Basisstation B1 ein Gespräch aufnehmen, so sucht er einen freien Funkkanal (Duplexkanal). Bei der Kanalsuche ergibt sich dann, daß der Funkkanal K1 frei ist. Dabei wird angenommen, daß das Funkfeld des zweiten Funkpaares P2 den ersten Handapparat H1 nicht erreicht. Der Suchvorgang bei dem ersten Handapparat H1 wird dadurch beendet und der eigene Kennungskode über den Funkkanal K1 zu der ersten Basisstation B1 gesendet.

Der Hochfrequenz-Pegeldetektor PD (vgl. Fig. 2) der ersten Basisstation B1 wird somit von zwei Trägern zweier verschiedener schnurloser Telefonanlagen, ST1 und ST2, gleichzeitig aktiviert. Die erste Basisstation B1 beantwortet den Kennungskode des ersten Handapparates H1 mit einem Quittungssignal, wodurch das Gespräch für das Funkpaar P1 auf demselben Funkkanal K1 eingeleitet wird. Die Folge ist, daß beide Funkpaare P1, P2 gleichzeitig hören. Diese Mithörmöglichkeit wird durch ein an Hand der Fig. 2 beschriebenes Verfahren vermieden.

Will zum Beispiel der erste Handapparat H1 (Fig. 2) ein Gespräch führen und hat er mit seinem Kanalsucher KS einen freien Funkkanal K1 gefunden, so beendet er die Kanalsuche und sendet einen von seinem Kennungsgeber KG geliefertes individuelles Kennungskodesignal über sein Sendeteil S und seine Sende-Empfangsantenne A auf dem Funkkanal K1 aus. Empfängt die erste Basisstation B1 mit ihrem Empfangsteil E den mit dem Kennungskode des ersten Handapparates H1 modulierten Träger und spricht der Hochfrequenz-Pegeldetektor PD der ersten Basisstation B1 auf den Träger an, so stoppt dieser den Kanalsucher KS der ersten Basisstation B1, und der Kennungsauswerter KA der ersten Basisstation prüft, ob der Kennungskode des ersten Handapparates H1 vorliegt. Hat der Kennungsauswerter die Kennung erkannt, sendet die erste Basisstation B1 einen von ihrem Quittungsgeber QG erzeugten Quittungssignalkode über den Funkkanal K1 an den ersten Handapparat H1. Erkennt der Quittungsauswerter QA des ersten Handapparates den Quittungskode, so unterbricht er für eine bestimmte kurze Zeit, vorzugsweise für ≦ 100 ms, die Aussendung des Trägers.

Diesen Trägerausfall stellt der Hochfrequenz-Pegeldetektor PD der ersten Basisstation fest, wodurch dieser inaktiv wird, sofern kein zweiter Träger in demselben Funkkanal K1 empfangen wird. Nur wenn der Hochfrequenz-Pegeldetektor PD den Trägereinbruch festgestellt hat, veranlaßt er den Quittungskodegeber QG, einen Quittungskode an das Sendeteil S der ersten Basisstation B1 abzugeben. Durch das dann von der ersten Basisstation ausgesendete Quittungskodesignal wird das Durchschalten des Gespräches herbeigeführt.

Wird dagegen in der Zeitspanne der Trägerunterbrechung ein Träger von dem Handapparat H2 der anderen schnurlosen Telefonanlage ST2 ausgesendet und von der ersten Basisstation B1 empfangen, so kommt keine Aussendung eines Quittungskodesignals und dadurch auch kein Gespräch zustande. In diesem Fall kann das zweite Funkpaar P2 somit sein Gespräche fortführen, während das erste Funkpaar P1 für sein Gespräch einen anderen freien Kanal suchen muß.

In dem Fachmann bekannter Weise können Kennungsgeber KG und Kennungsauswerter KA sowie Quittungsgeber QG und Quittungsauswerter QA von Handapparat bzw. Basisstation zu einer Baueinheit zusammengefaßt sein.

## Patentansprüche

1. Verfahren zum Vermeiden des unberechtigten Mithörens bei schnurlosen Telefonen, die aus je einer Basis-Funksende- und -empfangsstation (B1) und einer in der Hand zu haltenden Funksende- und -empfangsstation (H1) bestehen, wobei jeder unbelegte Stationsteil (B1, H1) standig die vereinbarten Duplex-Funkkanäle unter Verwendung eines Pegeldetektors (PD) auf einen Anruf absucht, im Falle eines durch den Pegeldetektor erkannten Hochfrequenzträgers den Kanalsuchvorgang beendet, das Vorhandensein des eigenen Kennungskodes auswertet und bei erkanntem eigenen Kennungskode ein individuelles Quittungskodesignal an das rufende Stationsteil (H1) aussendet, dadurch gekennzeichnet, daß das rufende Stationsteil (H1) nach dem Erkennen des Quittungskodesignals seinen Träger für eine bestimmte kurze Zeit abschaltet, wodurch der Pegeldetektor (PD) des gerufenen Stationsteils (B1) inaktiv wird, sofern der Funkkanal (K1) nicht durch einen Träger eines anderen rufenden Stationsteils (H2) einer benachbarten schnurlosen Telefonanlage (ST2) belegt ist, und daß nur bei von dem Pegeldetektor erkanntem kurzzeitigen Trägerausfall das Quittungskodesignal erneut ausgesendet und dadurch das Gespräch zwischen dem rufenden Stationsteil (H1) und dem gerufenen Stationsteil (B1) durchgeschaltet wird.

2. Verfahren nach Anspruch 1, dadurch gekennzeichnet, daß die bestimmte kurze Zeit ≦ 100 ms ist.

## Claims

1. Method for preventing unauthorized monitoring with cordless telephones, which comprise in each case a base radio transmitting and receiving station (B1) and a hand-held radio transmitting and receiving station (H1), in which each non-seized station part (B1, H1) constantly scans the agreed duplex radio channels for a call using a level detector (PD), and if a high-frequency carrier is detected by the level detector it terminates the channel search operation, evaluates the presence of its own identification code, and if it detects its own identification code transmits an individual acknowledgement code signal to the calling station part (H1), characterised in that, after detection of the acknowledgement code signal, the calling station part (H1) switches off its carrier for a defined short time, with the result that the level detector (PD) of the called station part (B1) becomes inactive, provided that the radio channel (K1) is not seized by a carrier of another calling station part (H2) of a neighbouring cordless telephone system (ST2), and in that the acknowledgement code signal is retransmitted only if a brief carrier failure is detected by the level detector and as a result the call between the calling station part (H1) and the called station part (B1) is switched through.

2. Method according to Claim 1, characterised in that the defined short time is ≦ 100 ms.

## Revendications

1. Procédé pour éviter l'écoute illicite de téléphones sans fil qui comprennent chaque fois une station de base, d'émission et de réception (B1) et une station d'émission et de réception (H1) qui se tient à la main, chaque partie de station non occupée (B1, H1) recherchant en permanence les canaux d'émission en duplex, convenus, en utilisant un détecteur de niveau (PD) pour trouver un appel, et dans le cas d'une porteuse haute fréquence, reconnue par le détecteur de niveau, la recherche de canal étant terminée, la présence d'un propre code de reconnaissance est exploitée et lorsqu'un code caractéristique, propre, est détecté, il y a émission d'un signal de code d'acquittement individuel vers la partie de la station appelante (H1), procédé caractérisé en ce que la partie de station appelante (H1) coupe, pendant une courte durée, déterminée, sa porteuse après la reconnaissance du signal de code d'acquittement, et le détecteur de niveau (PD) de la partie de station appelée (B1) devient inactif, dans la mesure où le canal d'émission (K1) n'est pas occupé par une porteuse d'une autre partie de station appelante (H2) d'une installation téléphonique sans fil (ST2) voisine, et en ce que seulement en cas de disparition de courte durée de la porteuse reconnue par le détecteur de niveau, le signal du code d'acquittement est émis de nouveau et la conversation entre la partie de station appelante (H1) et la partie de station appelée (B1) est commutée.

2. Procédé selon la revendication 1, caractérisé en ce que la durée courte, déterminée, est inférieure ou égale à 100 ms.
